# EUROPÄISCHE PATENTANMELDUNG

(11) **EP 1 767 506 A1**
(43) Veröffentlichungstag der Anmeldung: **28.03.2007**
(21) Anmeldenummer: 05021009.5
(22) Anmeldetag: 27.09.2005
(51) Int. Cl.: C04B 24/34, C04B 40/00

(54) **In Wasser redispergierbares Pulver, Herstellverfahren und Verwendung**

(71) Anmelder: Elotex AG, 6203 Sempach Station (CH)
(72) Erfinder: Aberle, Thomas, Dr., 6207 Nottwil (CH); Keller, Adrian, 5102 Rupperswil (CH)
(74) Vertreter: Hagemann, Heinrich

(57) **Zusammenfassung**

Die vorliegende Erfindung betrifft ein Additiv für hydraulisch abbindende Systeme zur Reduktion von Ausbiühungen in hydraulisch abgebundenen Systemen, welches bevorzugt als ein in Wasser redispergierbares Pulver vorliegt und sich insbesondere als Additiv für die Zugabe bei Trockenmörteln eignet. Das in Wasser redispergierbare Pulver besteht aus mindestens einer organischen Komponente und mindestens eines wasserlöslichen organischen polymeren Schutzkolloids sowie gegebenenfalls weiteren Additiven, wobei die organische Komponente mindestens eine Verbindung mit einer cyclischen Gruppe enthält,' die ganz oder teilweise gesättigt ist, und einen Schmelzpunkt von etwa -20 bis 250 °C sowie ein Molekulargewicht von etwa 100 bis 10'000 besitzt, und mit dem wasserlöslichen organischen polymeren Schutzkolloid in Wasser eine stabile Dispersion bildet, wobei das Gewichtsverhältnis der organischen Komponente zum wasserlöslichen organischen polymeren Schutzkolloid etwa von 95 : 5 bis 5 : 95 beträgt. Zudem betrifft die Erfindung auch ein Verfahren, bei dem der Trocknungsschritt weggelassen wird. Das erfindungsgemässe Additiv kann in hydraulisch abbindenden Massen insbesondere in Beton, Gips- und/ oder Kalk- und/oder Zement- Putzen, Reparatur- und/ oder Vollwärmeschutzmörtel, Fugen- und/ oder Fliesenklebern, Nivellier- und/ oder Spachtelmassen, Dichtungsschlämmen, und/ oder als Additiv für Betonanstriche, sowie für Klebstoffe verwendet werden.

## Beschreibung

Die vorliegende Erfindung betrifft ein in Wasser redispergierbares Pulver auf Basis mindestens einer organischen Komponente und mindestens eines wasserlöslichen organischen polymeren Schutzkolloids, dessen Herstellverfahren, enthaltend eine Dispergierung mit anschliessender Trocknung, wobei der Trocknungsschritt auch weggelassen werden kann, sowie dessen vorteilhafte Verwendung, insbesondere als Additiv für hydraulisch abbildende Systeme zur Reduktion von Ausblühungen in hydraulisch abgebundenen Systemen.

Ausblühungen sind insbesondere bei zementären Systemen wie Beton, Putze und Mörteln bekannt. Der Fachmann versteht darunter weissliche Ablagerungen an der Oberfläche, die vor allem durch herausgelöstes Kalziumhydroxid entstehen, welches durch Kohlendioxid aus der Luft zu Kalziumcarbonat weiterreagiert. Dabei können auch noch weitere Salzablagerühgen enthalten sein. Obwohl solche Ausblühungen in der Regel keinen nennenswerten Einfluss auf die physikalischen Werte des Substrates haben, werden sie doch vor allem bei eingefärbten oder grauen Oberflächen als sehr störend empfunden.

Oft versucht der Rezepturentwickler mangels Alternativen die Ausblühungen mittels hydrophober Additive zu unterbinden. Dabei spielt die Überlegung eine Rolle, dass wenn kein Wasser in die Mörtel-, Putz- oder Betonschicht eindringen kann, auch kein Kalziumhydroxid ausgewaschen werden kann. Dies ist jedoch eine falsche Schlussfolgerung: Einerseits enthält das frisch aufgetragene Material noch viel Wasser, das zusammen mit gelösten Salzen zur Oberfläche hin migriert. Verdunstet das Wasser, bleiben die Salzrückstände als unerwünschte Rückstände zurück. Zudem kann auch Wasser von der anderen Seite her durch das hydraulisch abgebundene Material diffundieren und somit den gleichen Effekt aufweisen. Andererseits ist es praktisch unmöglich, eine absolute Hydrophobie zu haben. Selbst wenn die Oberfläche einen sehr guten Abperleffekt aufweist, reicht es aus, wenn nur wenig Wasser einpenetriert, um nach der Austrocknung des Wassertropfens einen weissen Rückstand zu hinterlassen. So zeigen dann manche stark hydrophobe Materialien einen stärkeren Ausblüheffekt als anderer Dies macht auch deutlich, dass Hydrophobie und Ausblühungen auf ganz unterschiedlichen Mechanismen beruhen und nicht miteinander vergleichbar sind.

So beschreibt beispielsweise die DE 103 23 205 A1 ein hydrophobierendes, in Wasser redispergierbares Additiv auf Basis von Fettsäuren und deren Derivate, weiche wasserlösliche Schutzkolloide und ein oder mehrere Verbindungen aus der Gruppe von Fettsäuren und Fettsäurederivaten enthalten, die unter alkalischen Bedingungen Fettsäure oder das entsprechende Fettsäureanion freisetzen, gegebenenfalls in Kombination mit einer oder mehreren Organosilicium-Verbindungen. Durch den Einsatz dieses Additivs in Mörteln wird die Wasseraufnahme deutlich reduziert, aber nicht verhindert. Es wird nichts erwähnt über eine mögliche Reduktion der Ausblühungen. Zudem entstehen in der Regel durch die alkalische Hydrolyse der Fettsäurederivate unerwünschte, leicht flüchtige organische Komponenten (VOC).

Die GB 1,088,485 A beschreibt einen Prozess, um Ausblühungen bei Beton, basierend auf Portlandzement, zu inhibieren. Dabei wird bevorzugt eine wässrige Dispersion einer Mischung von Tallölharz und hochsiedenden Fraktionen von Tallöl, zum Teil auch mit Asphalt vermischt, entweder dem Beton zugemischt oder nachträglich auf die Oberfläche aufgebracht. Das Verfahren zur Herstellung solcher Dispersionen ist sehr kompliziert und somit teuer, wobei die dunkle bis schwarze Farbe der Mischung deren Einsatzbereich stark einschränkt. Zudem sind keine in Wasser löslichen oder redispergierbaren Pulver beschrieben, was den Einsatz insbesondere in Trockenmörteln verunmöglicht.

In der DE 33 21 027 A1 wird ein Verfahren beschrieben, wobei unter anderem auch eine Verminderung der Effloreszenz (Ausblühungen) und eine Verringerung der Wasseraufnahme eintreten soll. Dabei werden Terpenpolymere, insbesondere von flüssigen niedermolekularen Terpenen allein oder in Mischung mit anderen Terpenkohlenwasserstoffen, die den zementhaltigen Baustoffen in einer Menge von 0.1 - 10 Gew.-% zugesetzt werden, verwendet. Die Zugabe der Terpen-basierten Verbindungen erfolgt in emulgierter Form oder durch Aufsprühen von flüssigen oder gelösten Terpenen, was den Einsatz unter anderem in Trockenmörteln verunmöglicht. Zudem wird nichts genaueres über die Art der eingesetzten Terpene sowie der Emulgatoren, anhand derer die Terpen-Verbindungen emulgiert werden, gesagt.

Die JP 1 252 652 A beschreibt eine wässrige Dispersion mit ausgezeichneter Stabilität für beispielsweise Papieranwendungen. Dazu wird eine hydrophobe Substanz mit niedrigem Molekulargewicht mit Hilfe eines modifizierten Polyvinylalkohols, welche eine spezielle kationische Gruppe enthält, dispergiert, wobei die hydrophobe Substanz mit niedrigem Molekulargewicht ein Harz sein kann. Die beschriebene wässrige Dispersion ist nur mit grösserem Aufwand herzustellen, da der Polyvinylalkohol mit kationischer Gruppe zuerst separat mittels radikalischer Polymerisation von Vinylacetat und beispielsweise Dimethylairiminoethylvinylether mit nachfolgender Verseifung des Copolymers hergestellt werden muss. Zudem ist diese Dispersion nicht in Pulverform erhältlich und hat ein ganz anderes Anwendungsgebiet,

Die EP 799 876 A2 beschreibt eine pulverförmige Klebstoffzusammensetzung, die mindestens ein Polymerisat basierend auf mindestens einer Dispersion, mindestens ein klebrigmachendes Harz und gegebenenfalls ein oder mehrere Schutzkolloide sowie Antibackmittel enthält. Diese Klebstoffzusammensetzung eignet sich zum Verkleben von porösen und semiporösen Substraten, insbesondere als Fussbodenklebstoff. Ein Einsatz in hydraulisch abbindenden Systemen wird nicht erwähnt, insbesondere nicht der Einsatz zur Verminderung von Ausblühungen. Zudem ist es zwingend, dass ein Polymerisat basierend auf mindestens einer Dispersion enthalten ist, was die Formulierungsmöglichkeiten äusserst einschränkt.

Es war nun die Aufgabe der Erfindung, ein Additiv bereitzustellen, welches das Ausblühen von hydraulisch abgebundenen Systemen, insbesondere auf Basis von Zement, wie beispielsweise in Mörteln und bei Beton, unterbindet oder zumindest sehr stark reduziert. Zudem soll das Additiv insbesondere für die Formulierung von Trockenmörteln in Pulverform vorliegen um die bekannten Nachteile von flüssigen Rohstoffen, wie beispielsweise mangelnde Frost-Tau-Beständigkeit, oder limitierte Lagerbeständigkeit ohne Zusatz von toxischen Bioziden zu umgehen, sowie um eine einfache Dosierung bei Trockenmörtetformulierungen zu ermöglichen. Es soll aber auch möglich sein, für ausgewählte Anwendungen, wie beispielsweise die Herstellung von Beton, das Additiv in flüssiger Form zu dosieren. Zudem ist es essentiell, dass sich dieses Additiv in die mit Wasser angerührte Mörtelmatrix einfach einrühren lässt, ohne dass spezielle Mischvorgänge beachtet werden müssen. Dabei spielt es auch eine sehr wichtige Rolle, dass sich das Additiv in der Mörtelmischung sehr gut benetzen, redispergieren und in der Matrix einfach homogen verteilen lässt. Zudem ist es wichtig, dass mit dem Additiv keine nachteiligen oder ganz andere Mörteleigenschaften erhalten werden, d. h. es soll möglich sein, das Additiv in bestehende Mörtelformulierungen zu geben, ohne dass sich deren Eigenschaften, bis auf die gewünschte starke Reduktion des Ausblüheffektes und eine allfällige Verbesserung der Hydrophobie verändern. Das Additiv soll zudem unabhängig von anderen Mörtelrohstoffen dosiert werden können, was dem Formulierer eine sehr grosse Flexibilität ermöglicht. Weiter ist es wichtig, dass sich durch das Additiv die Rohstoff- und Herstellkosten des Trockenmörtels nicht oder nur geringfügig ändern. Bei der Herstellung des Additivs soll es zudem problemlos möglich sein, die Primarpartiketgrösse einfach zu variieren, um so die Endeigenschaften gezielt einstellen zu können. Weiter ist es vorteilhaft, wenn sich zumindest ein grösserer Anteil des Additivs aus nachwachsenden Rohstoffen einfach gewinnen lässt. Zudem soll das Additiv keine oder nur eine sehr geringe Gefahrstoffklassifizierun aufweisen.

Die komplexe Aufgabe konnte überraschenderweise gelöst werden mit einem in Wasser radispergierbaren Pulver auf Basis mindestens einer organischen Komponente und mindestens eines wasserlöslichen organischen polymeren Schutzkolloids sowie gegebenenfalls weiteren Additiven, wobei die organische Komponente mindestens eine Verbindung mit einer cyclischen Gruppe enthält, die ganz oder teilweise gesättigt ist und einen Schmelzpunkt von etwa -20 bis 250 °C sowie ein Molekulargewicht von etwa 100 bis 10'000 besitzt, sowie mit dem wasserlöslichen organischen polymeren Schutzkolloid in Wasser eine stabile Dispersion bildet, wobei das Gewichtsverhältnis der organischen Komponente zum wasserlöslichen organischen polymeren Schutzkolloid etwa 95 : 5 bis 5 : 95 beträgt.

Die organische Komponente mit einer ganz oder teilweise gesättigten cyclischen Gruppe kann ein synthetisch hergestelltes Produkt oder ein Naturprodukt sein. Als Naturprodukt eignen sich insbesondere Harze wie Balsamharz, Wurzelharz, Tallharz und/ oder Polyterpenharze, wobei diese in modifizierter und/ oder unmodifizierter Form vorliegen können, wobei die Modifikation natürlichen oder synthetischen Ursprungs sein kann. Bevorzugt sind Terpenoide, wobei darunter u.a. Monoterpene, Sesquiterpene, Diterpene, Sesterterpene, terpene, Tetraterpene, sowie Polyterpene zu verstehen sind, Terpenharze, welche durch Polymerisation von Terpenen, Diterpenen und/ oder Limonen gewonnen werden, sowie Terpen-Phenol-Harze, welche durch Säurekatalysierte Addition von Phenolen an Terpene und/ oder Kolophonium hergestellt werden, können aber auch auf einer anderen Basis beruhen.

Es ist wichtig, dass die organische Komponente mindestens eine cyclische Gruppe enthält. Bevorzugt sind mono-, di-, tri-, tetra- und/ oder pentacyclische Gruppen. Eine spezielle Ausführungsform sind organische Komponenten, welche mindestens eine cyclische Gruppe mit einem C₅- und/ oder C₆- Ring enthalten. Zudem kann die cyclische Gruppe ganz oder teilweise gesättigt sein. Eine spezielle Ausführungsform enthält zwei oder mehr C=C Doppelbindungen, wobei bevorzugt mindestens zwei miteinander konjugiert sind.

Die organische Komponente kann zudem mindestens eine Verbindung mit einer oder mehreren funktionellen Gruppen, wie beispielsweise Amine, Amide, Amidine, Imine, Anhydride, Ester, Sulfate, Sulfonate und/ oder Thiole, enthalten. Ganz besonders bevorzugt sind Verbindungen mit Carboxyl-, Carbonyl-, Aldehyd- und/ oder Alkoholgruppen, wobei Harzsäuren und deren Derivate speziell bevorzugt sind.

Als geeignete organische Komponenten eignen sich beispielsweise Monoterpene wie Campher, Camphersäure, Isonitrosocampher, Campherchinon, Menthol, Limonen, Pinen, Camphercarbonsäure und/ oder Alkylhydroxymethylencampher sowie deren Derivate sowie damit hergestellte Polymere wie Polyterpenharze, Diterpene wie beispielsweise Neoabietinsäure, Lävopinarsäure, Pimarsäure, Isopimarsäure, Abietinsäure, Dehydroabietinsäure, Dihydroabietinsäure, Sylvinsäure, Palustrinsäure, Kolophonium, Retinal, Tretinoin, Agelasin E, Agelasidin B, Oxocativinsäure, Pinifolsäure, Labdendisäure, Dihydroxyhalimadiensäure, Epoxycierodatriensäure, lsopimaradiensäure, Isopimarsäure, lsopimaradiendiol, Isopimaratrientriol, Junceinsäure, Podocarpinsäure, Podocarpinol, Rosein III, Hydroxyoxorosenolid, Cassainsäure, Cassaidin, Cassain, Cassamin, Auricularsäure, Cleistanthadiensäure, Isocopalendial, Abtietadiensäure, Abietsäure, Dihydroxyabtietatriensäure, Lanugon A, Carnosolsäure, *abeo*-Abietan, Coleon P, Cycloabietan, Beyerentriol, Beyerol, Hydroxybeyerensäure, Dihydroxykaurensäure, Dihydroxykaurenolid, Kahweol, Methylbutanoyloxyvillanovahdiol, Dihydroxyatisenolid, Dihydroxyatisanon, Atisendiol, Gibberellin A₁₈, Gibberellin A₁, Gibberellin A₃, Giberellinsäure, Grayanotoxenpentoi, Leucothol, Epoxygrayanotoxanpentol, Rhodojaponin III, Leucothol C, Xeniolit A, Xeniaacetal, und/ oder Dihydroxyserrutatansäuro, Isodictyohemiacetal, sowie deren Derivate, Sesterterpene wie beispielsweise Dysideapalaunsäure, Dalvisyriacolid, Salvileucalidmethylester, Epoxyhydroxyoxoophioboladienal, Oxoophiobolatetraenat, Ophiobolin A, Ophiobolin G, Dihydroxyscalarenolid und/ oder Scalarin, sowie deren Derivate, Triterpene wie beispielsweise Dipterocarpol, Hydroxydammarenon II, Dammarenolsäure, Tirucallol, Ursonsäure, Oleanonsäure, Isomasticadienonsäure, Fusidinsäure, Acetoxydihydroxyfus!dadiensäure, Helvolininsäure, Masticadienonsäure, Diacetoxydioxofusidadiensäure, Trihydroxycycloartensäure, Ananassäure, Passiflorin, Acetoxytrihydrioxycucrbitadientrion, Cucurbitacin B, Cucurbitacin F, Ursolsäure, Pentahydroxycucurbitadieridiön, Hydroxyursansäure, Hydroxyursensäure, Pomolsälure, Hydroxyoleanensäure, Dihydroxyursensäure, Boswellinsäure, Hydroxyursensäure und/oder Hydroxyoxoursensäure, sowie deren Derivate, wobei die aufgeführten Komponenten auch als Mischung vorliegen können und keinesfalls als limitierende Auswahl verstanden werden dürfen, Ganz speziell bevorzugt sind Harzsäuren, insbesondere Neoabietinsäure, Lävopinarsäure, Pimarsäure, Isopimarsäure, Abietinsäure, Dehydroabietinsäure, Dihydroabietinsäure, Sylvinsäure, Palustrinsäure und/ oder Kolophonium.

Es ist vorteilhaft, wenn die organische Komponente einen Schmelzpunkt, ermittelt mittels DSC (DIN 51007), von etwa -20 bis 250 °C, insbesondere von etwa 0 bis 200 °C und ganz besonders bevorzugt von etwa 50 bis 180 °C aufweist. Falls die organische Komponente einen Schmelzbereich und nicht einen eigentlichen Schmelzpunkt aufweist, wird die mittlere Temperatur des Schmelzbereiches zur Bestimmung des Schmelzpunktes herangezogen. Kann beispielsweise wegen thermischer Zersetzung kein Schmelzpunkt ermittelt werden, kann hilfsweise auch der Erweichungspunkt, respektive die mittlere Temperatur des Erweichungssbereiches anstelle des Schmelzpunktes verwendet werden. Zudem soll das Molekulargewicht der organischen Komponente zwischen etwa 100 bis 10'000, insbesondere zwischen etwa 200 bis 5000 und ganz besonders bevorzugt zwischen etwa 300 bis 2500 liegen. Dieses wird typischerweise bei niedermolekularen Verbindungen über die Strukturformel und bei höhermolekularen Produkten mittels statischer Lichtstreuung bestimmt.

Die organische Komponente ist typischerweise in Wasser unlöslich oder nur leicht löslich. In einer speziellen Ausführungsform ist sie im sauren bis neutralen Wasser nicht oder nur leicht löslich, wobei die Löslichkeit kleiner als etwa 10 Gew.-%, bevorzugt kleiner als etwa 1 Gew.-% und insbesondere kleiner etwa 0.1 Gew.-% beträgt. In einer weiteren bevorzugten Ausführungsform ist die organische Komponente in verdünnter Natronlauge teilweise oder ganz löslich, wobei die Löslichkeit bei einem pH im Bereich von etwa 8 bis 12 grösser als etwa 0.01 Gew.-%, bevorzugt grösser als etwa 0.1 Gew.-% und insbesondere grösser als etwa 1 Gew.-% beträgt.

Es ist hilfreich, dass das wasserlösliche organische polymere Schutzkolloid mit der organischen Komponente in wässriger Lösung eine stabile Dispersion bildet, welche auch nach 24 Stunden noch die gleichen physikalischen Eigenschaften wie beispielsweise pH, Viskosität, Teilchengrösse und Farbe besitzt sowie dass keine Separierung, d.h. Absetzen von Dispersionspartikein, auftritt. Da je nach Art der organischen Komponente verschiedene wasserlösliche organische polymere Schutzkolloide die gewünschte Dispersionsstabilität ergeben, kann ein organisches polymeres Schutzkolloid für bestimmte organische Komponenten ideal sein, während mit anderen organischen Komponenten eine Inkompatibilität auftreten kann. Deshalb muss das organische polymere Schutzkolloid auf die organische Komponente abgestimmt werden. Bevorzugt sind Stabilisierungssysteme, welche es auf einfache Art erlauben, die erhaltene wässrige Dispersionszusammensetzung mittels Trocknung in Pulver zu überführen, weiche in Wasser redispergierbar sind.

Typischerweise geeignete wasserlösliche organische polymere Schutzkolloide sind bevorzugt höhermolekulare Verbindungen. Darunter fallen natürliche Verbindungen wie Polysaccharide, welche gegebenenfalls chemisch modifiziert sind, synthetische höhermolekulare Oligomere sowie Polymerisate wie nicht oder nur schwach ionischen Charakter haben, und/ oder Polymerisate, welche mittels Monomeren, die zumindest zum Teil ionischen Charakter haben, beispielsweise mittels radikalischer Polymerisation in wässrigem Medium in-situ hergestellt werden. Es ist auch möglich, dass nur ein Stabilisierungssystem verwendet wird, oder verschiedene Stabilisierungssyteme miteinander kombiniert werden.

Bevorzugt einsetzbare Polysaccharide und deren Derivate sind kaltwasserlösliche Polysaccharide und Polysaccharidether, wie Celluloseether, Stärkeether (Amylose und/oder Amylopectin und/ ode deren Derivate), Guarether und/ oder Dextrine. Es können auch synthetische Polysaccharide wie anionische, nonionische oder kationische Heteropolysaccharide, insbesondere Xanthan Gum oder Wellan Gum verwendet werden. Die Polysaccharide können, müssen aber nicht, chemisch modifiziert sein, beispielsweise mit Carboxgmethyl-, Carboxyethyl-, Hydroxyethyl-, Hydroxypropyl-, Methyl-, Ethyl-, Propyl- und/ oder langkettigen Alkylgruppen. Weitere natürliche Stabilisierungssysteme sind Alginate, Peptide und/ oder Proteine wie beispielsweise Gelatine, Casein und/ oder Soja-Protein. Ganz besonders bevorzugt sind Dextrine, Stärke, Stärkeether, Casein, Soja-Protein, Hydroxyalkyl-Cellulose und/ oder AlkylHydroxyalkyl-Cellulose.

Synthetische Stabilisierungssysteme können aus einem oder mehreren Schutzkolloiden bestehen, zum Beispiel ein oder mehrere Polyvinylpyrrolidone und/ oder Polyvinylacetale mit Motekulargewichten von 2000 bis 400'000, voll- oder teilverseifte und/ oder modifizierte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPas, insbesondere von etwa 3 bis 40 mPas (gemessen bei 20°C nach DIN 53015), sowie Melaminformaldehyd-sulfonate, Naphthafinformaldehydsulfonate, Blockcopolymerisate von Propylenoxid und Ethylenoxid, Styrol-Maleinsäure- und/ oder Virlylether-Maleinsäure-Copolymerisate. Höhermolekulare Oligomere können nicht-ionische, anionische, kationische und/ oder amphotere Emulgatoren sein, wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen, sowie Ester von Sulfobernsteinsäure, quartemäre Alkylammonium-Salze, quartemäre Alkylphosphonium-Salze, Polyadditionsprodukte wie Polyalkoxylate, beispielsweise Addukte von 5 bis 50 Mol Ethylenoxid und/ oder Propylenoxid pro Mol an lineare und/oder verzweigte C₆- bis C₂₂-Alkanole, Alkylphenole, höhere Fettsäuren, höhere Fettsäureamine, primäre und/ oder sekundäre höhere Alkyl-Amine, wobei die Alkylgruppe jeweils bevorzugt eine lineare und/ oder verzweigte C₆- bis C₂₂-Alkylgruppe ist. Ganz besonders bevorzugt sind synthetische Stabilisierungssysteme, insbesondere teilverseifte gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Bevorzugte synthetische Stabilisierungssysteme sind insbesondere modifizierte und/ oder unmodifizierte Polyvinylalkohole mit einem Hydrolysegrad von 80 bis 98 Mol-% und einer Höpplerviskosität als 4%ige wässrige Lösung von 1 bis 50 mPas und/ oder Polyvinylpyrrolidon.

Das Gewichtsverhältnis der organischen Komponente zum wasserlöslichen organischen polymeren Schutzkolloid hängt vor allem von den eingesetzten Materialien und den zu erzielenden Effekten ab. Es kann von etwa 95 : 5 bis 5 : 95 betragen, insbesondere von etwa 90 : 10 bis 10 : 90, und bevorzugt von etwa 80 : 20 bis 20 : 80. und ganz besonders bevorzugt von etwa 70 : 30 bis 30 : 70.

Das erfindungsgemässe, in Wasser redispergierbare Pulver kann auch weitere Additive enthalten. Der Gehalt der Additive, bezogen auf die Summe der organischen Komponente und dem wasserlöslichen organischen polymeren Schutzkolloid, unterliegt keinen Grenzen. So kann er für beispielsweise grenzflächenaktive Substanzen sehr klein sein und im Rahmen von etwa 0.01 Gew.-% oder mehr, insbesondere etwa 0.1 Gew.-% und bevorzugt etwa 1 Gew.-% liegen. Auf der anderen Seite können dem erfindungsgemässen Pulver auch wesentlich grössere Anteile an Additiven beigemischt werden, wie beispielsweise Füllstoffe oder Dispersionspulver. In diesem Fall können auf einen Teil des erfindungsgemässen, in Wasser redispergierbaren Pulvers bis zu etwa 1000 Teile, insbesondere etwa 500 Teile und bevorzugt etwa 100 Teile an weiteren Additiven zugegeben werden.

Der Art der weiteren Additive sind keine Grenzen gesetzt. In der Regel haben sie eine wichtige Funktion in der Anwendung des efindungsgemässen Pulvers, was aber nicht zwingend ist. Es können auch durchaus noch weitere organische polymere Schutzkolloide zugegeben werden, wobei deren Zugabe in diesem Fall bevorzugt pulverförmig erfolgt.

Bevorzugte Additive sind pulverförmige und/ oder flüssige Entschäumer, Netzmittel, Alkyl-, Hydroxyalkyl- und/ oder Alkylhydroxyalkyl-Polysaccharidether wie Celluloseether, Stärkeether und/ oder Guarether, wobei die Alkyl- und Hydroxyalkylgruppe typischerweise eine C₁- bis C₄- Gruppe ist, synthetische Polysaccharide, wie anionische, nonionische oder kationische Heteropolysaccharide, insbesondere Xanthan Gum oder Wellan Gum, Cellulosefasem, Dispergiermittel, Zementverflüssiger, Abbindebeschleuniger, Erstarrungsbeschleuniger, Abbindeverzögerer, Luftporenbildner, Polycarboxylate, Polycarboxylatether, Polyacrylamide, voll- und/ oder teilverseifte, und gegebenenfalls modifizierte, Polyvinylalkohole, Polyvinylpyrrolidone, Polyalkylenoxide und Polyalkylenglykole, wobei die Alkylengruppe typischerweise eine C₂- und/ oder C₃- Gruppe ist, wozu auch Blockcopolymerisate zählen, Dispersionen und Dispersionspulver enthaltende Copolymerisate, wie beispielsweise auf Basis von Vinylacetat, Ethylen-Vinylacetat, Ethyfen-Vnylacetat-Vinylversatat, Ethylen-Vinylacetat-(Meth)Acrylat, Ethylen-Vinylacotat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/ oder Styrol-Butadien, Hydrophobierungsmittel, wie Silane. Silanester, Siloxane, Silicone, Fettsäuren und/oder Fettsäureester, Verdickungsmittel, Füllstoffe wie quarzitische und/ oder carbonatische Sande und/oder Mehle wie beispielsweise Quarzsand und/ oder Kalksteinmehl, Carbonate, Silikate, Schichtsilikate, gefällte Kieselsäuren, Leichtfüllstoffe wie Mirohohlkugeln aus Glas, Polymere wie beispielsweise Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calciummetasilikat und/oder vulkanische Schlacke sowie Puzzolane wie Metakaolin und/ oder latenthydraulische Komponenten. Ganz speziell bevorzugte Additive sind Polymerdispersionen, Dispersionspulver, Polysaccharidether, Verflüssiger und Hydrophobierungsmittel, insbesondere Silane, Silanester, Fettsäuren und/ oder Fettsäureester.

Die Erfindung betrifft auch ein Verfahren zur Herstellung von in Wasser redispergierbaren Pulvern insbesondere zur Herstellung der erfindungsgemässen Pulver, wobei die organische Komponente in einem ersten Schritt mit dem wasserlöslichen organischen polymeren Schutzkolloid in Wasser dispergiert und stabilisiert wird und die erhaltene Dispersion anschliessend getrocknet wird.

Dabei ist es vorteilhaft, aber keinesfalls zwingend, wenn die organische Komponente in flüssiger oder zäh-flüssiger Form mit dem in Wasser vorgelösten organischen polymeren Schutzkolloid vermischt wird. Wenn die organische Komponente bei Raumtemperatur in fester Form vorliegt, kann es daher hilfreich sein, wenn diese erwärmt wird. Es ist jedoch auch möglich, dass die organische Komponente, insbesondere wenn sie in Wasser unlöslich ist, in einem zuzugebenden Additiv gelöst oder gequollen wird und in dieser Form mit der wässrigen Phase mit dem organischen polymeren Schutzkolloid vermischt wird. Geeignete Additive sind oft rein organischer Natur und liegen in flüssiger Form vor. Es sind dies beispielsweise Silane, Silanester, Silikone und/ oder Siloxane, fllüssige Entschäumer und/ oder Netzmittel, niedermolekulare Polyalkylehglykole, Fettsäuren und/ oder Fettsäurederivate.

Als Silane, Silanester, Silikone und/ oder Siloxane, können grundsätzlich alle Organosiliciumverbindungen eingesetzt werden. Es ist jedoch von Vorteil, jedoch nicht zwingend, wenn sie in flüssiger Form vorliegen und der Siedepunkt bei Normaldruck der eingesetzten Organosiliciumverbindung nicht zu niedrig ist, bevorzugt etwa 100 °C oder mehr. Die Organosiliciumverbindungen können in Wasser löslich, unlöslich oder nur teilweise löslich sein. Bevorzugt sind dabei Verbindungen welche keine oder nur eine limitierte Wasserlöslichkeit besitzen. Es können Kieselsäureester mit der Formel Si(OR')₄, Organoxysilane der Formel Siₙ(OR')₄₋ₙ mit n = 1 bis 3, Polysilane der Formel R₃Si(SiR₂)ₙSiR₃ mit n = 0 bis 500, wobei n = 0 bis 8 bevorzugt ist, Di-, Oligo- und Polysiloxane aus Einheiten,rer allgemeinen Formel R_{c}H_{d}Si(OR')ₑ(OH)_{f(4-c-d-e-f)/2} mit c = 0 bis 3, d = 0 bis 2, e = 0 bis 3, f = 0 bis 3 und die Summe c+d+e+fje Einheit höchstens 3.5 ist, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atomen, Cycloakylreste mit 3 bis 10 C-Atomen. Alkylenreste mit 2 bis 4 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether-, Ester-, Amid-, Nitril-, Hydroxyl, Amin-, Carboxyl-, Sulfonsäure-, Carbonsäureanhydrid- und Carbonylgruppen substituiert sein können, wobei im Falle der Polysilane R auch die Bedeutung OR' haben kann.

Bevorzugte Organosiliciumverbindungen sind Tetraalkoxysilane, Alkyltrialkoxysilane, Dialkyldialkoxysilane, wobei als Alkylgruppen lineare und/ oder verzweigte C₁- bis C₂₀-Alkylgruppen und als Alkoxygruppen lineare und/ oder verzweigte C₁- bis C₁₀-Alkoxygruppen verwendet werden können, wobei als letztere bevorzugt Methoxy-, Ethoxy- und/ oder iso-Propöirygruppen verwendet werden. Zudem kann anstelle einer Alkylgruppe auch eine copolymerisierbare Alkylengruppe wie beispielsweise eine vinyl-, allyl- und/ oder (meth)acryl-Gruppe eingesetzt werden. Nicht limitierende Beispiele sind Vnylmethyldialkoxysilan, Tetraethoxysilan, Methyltripropoxysilan, Methyltriethoxysilan, γ-Chlorpropyltriethoxysilan, β-Nitritethyltriethoxysilan, γ-Mercaptopropyltriethoxy- und-trimethoxysilan, Phenyltriethoxysilan, n- sowie iso-Octyltriethoxysilan, Dipropyldiethoxysilan, Triphenylsilanol sowie deren vorzugsweise flüssigen Kondensationsprodukte, gegebenenfalls mit anderen niedrigsiedenden und/ oder wasserlöslichen Silanen, wie Methyltrimethoxysilan, γ-Aminopropyltriethoxysilan oder anderen Aminofunktionen enthaltenden Silanen, quartäre Ammoniumsalzgruppen und/ oder Epoxygruppen enthaltende Silane, Carbonsäure- und Carbonsäureanhydrid funtionelle Silane, Disilane wie Dimethyltetraalkoxydisilan, Tetramethyldialkoxydisilan, Trimethyltrialkoxydisilan oder deren im allgemeinen aus den entsprechenden Chlorverbindungen erhältlichen (Co)kondensate. Besonders bevorzugt sind auch durch Trimethylsiloxygruppen endblockierte Methylhydrogenpolysiloxane, durch Trimethylsiloxygruppen endblockierte Mischpolymere aus Dimethylsiloxan- und Methylhydrogensiloxan-Einheiten und in den endständigen Einheiten je eine Sigebundene Hydroxylgruppe aufweisende Dimethylpolysiloxane.

Um die organische Komponente mit wasserlöslichen organischen polymeren Schutzkolloiden in Wasser zu dispergieren sind in der Regel mittlere bis starke Scherkräfte hilfreich und oft auch notwendig. Sie kann batchweise, kontinuierlich wie beispielsweise über statische Mischer, oder semi-kontinuierlich sowohl bei Raumtemperatur als auch bei erhöhter Temperatur erfolgen. Besitzt die organische Komponente einen erhöhten Schmelzpunkt, und wird sie vorgängig nicht in einer anderen flüssigen Substanz gelöst, kann die Dispergierung auch bei Temperaturen von mehr als 100 °C erfolgen, wobei dann bevorzugt bei erhöhtem Druck gearbeitet wird. Um eine teilweise oder vollständige Zersetzung der organischen Komponente zu vermeiden kann bei Bedarf auch unter Schutzgasatmosphäre gearbeitet werden.

Bei der Dispergierung der organischen Komponente in dem wasserlöslichen organischen polymeren Schutzkolloid kann durch gezielte Einstellungen der verschiedenen Parametern insbesondere die Partikelgrösse der erzielten Dispersion variiert werden. Dazu gehören auch die Art und Menge des wasserlöslichen organischen polymeren Schutzkolloids. Bei sehr kleiner Partikelgrösse wird schon mit geringsten Mengen eine sehr effiziente Verteilung der eingesetzten Matrix erreicht. Ist die Partikelgrösse grösser, entfaltet das redispergierte Material seine Wirkung über einen längeren Zeitraums Daher ist es oft bevorzugt, eine multimodale Partikelgrössenverteilung zu haben, um sowohl eine grosse Effizienz, wie auch eine lange andauernde Wirkung; zu haben. So kann die mittlere Partikelgrösse der Dispersion typischerweise zwischen etwa 0.05 und 50 µm, insbesondere zwischen etwa 0.1 und 20 µm und bevorzugt zwischen etwa 1 und 10 µm betragen, wobei darauf zu achten ist, dass insbesondere bei niederviskosen Dispersionen die Partikelgrösse nicht zu gross ist, um eine Sedimentation zu verhindern. Dies spielt bei höher viskosen Dispersionen weniger eine Rolle.

Bezüglich des Feststoffgehalts der mit dem wasserlöslichen organischen polymeren Schutzkolloid stabilisierten Dispersion der organischen Komponente unterliegt die Erfindung keinerlei Grenzen. Es ist jedoch in der Regel von Vorteil, wenn der Feststoffgehalt etwa 10 bis 75 Gew.-%, insbesondere etwa 25 bis 65 Gew.-% und bevorzugt zwischen etwa 40 und 55 Gew.-% liegt. Die erhaltene Dispersion besitzt zudem bei 23°C typischerweise eine Brookfieldviskosftät, gemessen bei 23°C und 20 Upm nach DIN 53019, von etwa 100 bis 50'000 mPas, insbesondere etwa 500 bis 25'000 mPas und bevorzugt etwa 1000 bis 10'000 mPas

Die Trocknung der erhaltenen wässrigen Dispersion erfolgt bevorzugt mittels Sprühtrocknung, Gefriertrocknung, Fliessbetttrocknung, Walzentrocknung und/ oder Schnelltrocknung, wobei die Sprühtrocknung besonders bevorzugt ist, und die Versprühung beispielsweise mittels Sprührad, Ein- oder Mehrstoff-Düse erfolgen kann. Falls notwendig, kann die wässrige Dispersion dazu noch mit Wasser verdünnt werden, um eine für die Trocknung geeignete Viskosität zu erhalten. Der Trocknungstemperatur sind grundsätzlich keine Grenzen gesetzt. Insbesondere aus sicherheitstechnischen Überlegungen soll sie jedoch in der Regel etwa 200°C, insbesondere etwa 175°C nicht übersteigen. Um eine genügend effiziente Trocknung zu erzielen, sind Temperaturen von etwa 110°C oder höher, insbesondere etwa 120°C oder höher bevorzugt.

Die Erfindung betrifft auch das beschriebene Verfahren, wobei der Trocknungsschritt weggelassen wird. Die dabei erhaltene Dispersion wird dann in flüssigem Zustand verarbeitet, was insbesondere in 2-Komponenten Systemen und industriell verarbeiteten Systemen wie beispielsweise in Betonen von Relevanz ist.

Das erfindungsgemässe Verfahren beinhaltet auch die Zugabe von weiteren Additiven, die je nach Art und/ oder prozesstechnischen Möglichkeiten beispielsweise zunächst mit der organischen Komponente und/ oder mit dem wasserlöslichen organischen polymeren Schutzkolloid, vermischt werden, der erhaltenen wässrigen Dispersion zugegeben werden und/ oder als Pulver während und/ oder nach der Trocknung dem erhaltenen Pulver beigemischt werden. Flüssige Additive können aber auch während oder nach der Trocknung auf das Pulver gesprüht werden. Bevorzugt werden die flüssigen und/ oder wasserlöslichen Additive vor, während oder nach dem Dispergieren zugegeben und pulverförmige Additive werden bevorzugt während oder nach der Trocknung mit dem erhaltenen Pulver vermischt. Bevorzugte flüssige und/ oder wasserlösliche Additive sind Silane, Silanester, Siloxane, Fettsäuren und/ oder deren Derivate, Netzmittel, Entschäumer, Steuerungsmittel für die Zementhydratation und/oder zum Einstellen der Rheologie wie Abbindeverzögerer, Abbindebeschleuniger, Zementverflüssiger, Zementverdicker und/ oder Luftporenbildner. Bevorzugte pulverförmige Additive sind Füllstoffe, Antibackmittel, filmbildende polymere Dispersionspulver, Potysaccharidether wie beispielsweise Celluloseether, Stärkeether und/ oder Guarether, Steuerungsmittel für die Zementhydratation und/ oder Rheologie wie Abbindeverzögerer, Abbindebeschleuniger, Zementverflüssiger sowie Zementverdicker, Luftporehbtidner, Cellulosefasem, Dispergiermittel, Polyacrylamide, Polycarboxylatether, pulverförmige Hydrophobierungsmittel, insbesondere auf Basis von Silanen, Silanester, und/ oder Siloxanen, Verdickungsmittel, Füllstoffe, wie Carbonate, Silikate, Metakaoline, und/ oder latenthydraulische Komponenten. Der Anteil solcher Additive kann für beispielsweise grenzflächenaktive Substanzen sehr klein sein und im Rahmen von etwa 0.01 Gew.-% oder mehr, insbesondere etwa 0.1 Gew.-% und bevorzugt etwa 1 Gew.-%, liegen, bezogen auf den Anteil am erfindungsgemässen Additiv. Für andere Additive, wie beispielsweise Füllstoffe oder Dispersionspulver, kann dieser bis zu etwa 1000 Teile, insbesondere etwa 500 Teile und bevorzugt etwa 100 Teile betragen, bezogen auf einen Teil an erfindungsgemässem Additiv

Eine spezielle Ausführungsform ist ein Verfahren, bei dem die erhaltene wässrige Dispersion gemeinsam mit wässrigen polymeren Dispersionen getrocknet werden, wobei Dispersionspulver erhalten werden, welche das Ausblühen in hydraulisch abgebundenen Systemen stark reduzieren und gegebenenfalls sogar ganz unterbinden. Zudem kann bei Bedarf die wässrige Dispersion auch anderen zu trocknenden Dispersionen zugegeben werden, insbesondere solchen zur Hydrophobierung der hydraulisch abgebundenen Massen, beispielsweise zu Dispersionen auf Basis von Silanen, Silanestem, Siloxanen, Silikonen, Fettsäuren und/ oder Fettsäureester, wobei nach der Trocknung pulverförmige, in Wasser redispergierbare Hydrophoblerungsmittel erhalten werden, weiche das Ausblühen in hydraulisch abgebundenen Systemen stark reduzieren und gegebenenfalls sogar ganz unterbinden. Dabei ist es möglich, die zu trocknenden Dispersionen vor der Trocknung miteinander zu vermischen und gemeinsam zu versprühen und zu trocknen, oder aber gleichzeitig über eine Zweistoff- oder Mehrstoffdüse getrennt zu versprühen und anschliessend gleichzeitig miteinander zu trocknen.

Das erhaltene in Wasser redispergierbare Pulver zeigt in Wasser typischerweise eine sehr gute Benetzbarkeit und Redispergierbarkeit. Idealerweise redispergiert es schon bei Kontakt mit Wasser innerhalb von wenigen Sekunden, allenfalls durch leichtes Umrühren. In gewissen Fällen ist es auch möglich, dass etwas stärkere Scherkräfte notwendig sind. Jedenfalls genügen in der Regel die bei normal durchgeführten Anrührprozessen von Trockenmörteln auftretenden Scherkräfte um das erfindungsgemässe Pulver vollständig zu redispergieren und um eine homogene Verteilung in der zu redispergierenden Matrix zu erreichen. Dabei wird die Partikelgrösse der wässrigen Dispersion vor der Trocknung wieder erreicht.

Die Erfindung betrifft zudem auch die Verwendung einer nach dem beschriebenen Verfahren hergestellten wässrige Dispersion zur Reduktion von Ausblühungen in hydraulisch abgebundenen Systemen auf Basis von mindestens einer organischen Komponente und mindestens eines wasserlöslichen organischen polymeren Schutzkolloids, sowie gegebenenfalls weiteren Additiven, wobei die hergestellte Dispersion basiert auf etwa 5 bis 95 Gewichtsteilen, bezogen auf den Feststoffanteil, an mindestens einer organischen Komponente, welche bevorzugt Kolophonium, Abietinsäure, Sylvinsäure, Neoabietinsäure, Lävopinarsäure, Pimarsäure, Isopimarsäure, und/ oder Palustrinsäure und/ oder deren Derivate beinhaltet, auf etwa 5 bis 95 Gewichtsteilen, bezogen auf den Feststoffanteil, an mindestens einem wasserlöslichen organischen polymeren Schutzkolloid, wobei dieses mindestens einen modifizierten und/ oder unmodifizierten Polyvinylalkohol mit einem Hydrolysegrad von etwa 70 bis 100 Mol-%, insbesondere von etwa 80 bis 98 Mol-% und einer Höpplerviskosität als 4%ige wässrige Lösung von etwa 1 bis 50 mPas, insbesondere von etwa 3 bis 40 mPas (gemessen bei 20°C nach DIN 53015), und/ oder Polyvinylpyrrolidon darstellt, sowie auf 0 bis etwa 50 Gewichtsteilen, bezogen auf den Feststoffanteil, mindestens einer Silan- und/ oder Siloxan-Komponente enthält, wobei der Feststoffanteil zwischen etwa 10 und 70 Gew.%, insbesondere zwischen etwa 25 und 65 Gew.-% und bevorzugt zwischen etwa 40 und 55 Gew.-% liegt und die mittlere Partikelgrösse der dispergierten Teilchen zwischen etwa 0.05 und 50 µm, insbesondere zwischen etwa 0.1 und 20 µm und bevorzugt zwischen etwa 1 und 10 µm, und die Brookfieldviskosdät etwa 100 bis 50'000 mPas, und bevorzugt etwa 250 bis 25'000 mPas, und insbesondere etwa 500 bis 10'000 mPas beträgt.

Das erfindungsgemässe in Wasser redispergierbare Pulver sowie die nicht getrocknete wässrige Dispersion wird bevorzugt in hydraulisch abbindenden Massen, insbesondere in Betonen und Trockenmörteln eingesetzt. Solche Trockenmörtelformulierungen enthalten neben dem erfindungsgemässen Pulver insbesondere mindestens ein hydraulisch abbindendes Bindemittel sowie typischerweise weitere Mörtel-Formutierungsadditive, wie beispielsweise Füllstoffe wie Sand, Silikate und/ oder Carbonate, organische Bindemittel wie Dispersionspulver und/ oder Polyvinylalkohol, Rheologie-Steuerungsaddifive wie Polysaccharidether, Casein, Verflüssiger und/ oder Verdicker, und/ oder Hydratationssteuerungsadditive wie Beschleuniger und/ oder Verzögerer. Das hydraulisch abbindende Bindemittel ist Portlandzement, z.B. nach EN 196 CEM I, II, III, IV und V, Calciumsulfat in Form von α- und/ oder β-Halbhydrat und/oder Anhydrit, Tonerdeschmeizzement und/ oder Kalk, meist in der Form von Calciumhydroxid und/oder Calciumoxid. Bevorzugt werden Portlandzement, Tonerdeschmelzzement und/ oder Calciumsulfat. Dabei liegt der Anteil des erfindungsgemässen Pulvers bei 0.01 bis 25 Gew.-%, insbesondere etwa 0.1 bis 10 Gew.-%, und bevorzugt bei etwa 0.2 bis 5 Gew.-%, bezogen auf das hydraulisch abbindende Bindemittel. Wird die nicht getrocknete wässrige Dispersion verwendet, kann sie entweder alleine und/ oder zusammen mit flüssigen Polymerdispersionen und/oder anderen flüssigen Additiven entweder zusammen mit dem Anmachwasser oder separat der hydraulisch abbindenden Formulierung zugegeben werden.

Die Trockenmörtel, welche das erfindungsgemässe Pulver enthalten, werden bevorzugt dort eingesetzt, wo die applizierten und ausgetrockneten Mörtel in mehr oder weniger regelmässigen Kontakt mit Wasser kommen können. Neben typischen Anwendungen im Aussenbereich, wie beispielsweise Vollwärmeschutzmörtel, Dichtungsschlämmen, Gips- und/ oder Kalk- und/ oder Zement-Putzen und Reparaturmörtel, sind dies Fugenkleber, Plywood-Mörtel, Mörtel für Haftbrücken, zementäre Parkettklebstoffe, Zementgrundierungen, Fliesenkleber, Nivellier- und/ oder Spachtelmassen. Zudem können die erfindungsgemässen Pulver und die nicht getrockneten wässrigen Dispersionen als Betonadditiv und/ oder als Additiv für einen Betonanstrich eingesetzt werden.

Zudem ist es auch möglich, das erfindungsgemässe Pulver und/ oder die nach dem beschriebenen Verfahren hergestellten wässrigen Dispersion in Klebstoffen einzusetzen. Dabei ist es besonders vorteilhaft, das Pulver in Pulverklebstoffen einzusetzen, insbesondere wo schon während der frühen Trocknungsphase eine erhöhte Kohäsion gewünscht wird.

Die Erfindung wird anhand der nachfolgenden Beispiele erläutert.

### A) Herstellung von wässrigen Dispersionen und von in Wasser redispergierbaren Pulvern

### Beispiel 1: Herstellung von Pulver 1

Es wurden 100g einer 20%igen Polyvinylalkohoflösung mit einem Verseifungsgrad von 88 Mol-% und einer Höpplerviskosität als 4%-ige Lösung von 4 mPas in einem 500 ml Glasgefäss mit einem Propellerrührer unter Rühren bei 1000 Upm auf 85°C erhitzt. Anschliessend wurden 20g festes Kolophonium (Fluka) langsam zugegeben, wobei das Kolophonium vollständig dispergiert wurde. Es resultierte eine stabile, leicht gelbliche Dispersion mit einem Feststoffanteil von 33 Gew.-%, einer Brookfieldviskosität bei 23°C von 10.000 mPas bei 20 Upm und einer mittleren Partikelgrösse der dispergierten Teilchen von 9 µm, welche durch Veränderung der Verfahrensparameter einfach verändert werden kann. Die erhaltene Dispersion wurde ohne weitere Additive mittels konventioneller Sprühtrocknung bei einer Eingangstemperatur von 125°C zu einem gelblichen, freifliessenden, in Wasser redispergierenden Pulver getrocknet, wobei keine nennenswerte Verschmutzung im Sprühturm festzustellen war und die Ausbeute im normalen Bereich lag.

### Beispiel 2: Herstellung von Pulver 2

Beispiel 1 wurde wiederholt, wobei jedoch 46.7g festes Kolophonium zugegeben wurden. Es resultierte eine stabile, leicht gelbliche Dispersion mit einem Feststoffanteil von 45 Gew.-%, einer Broökfieldviskosität bei 23°C von 1.000 mPas bei 20 Upm und einer mittleren Partikelgrösse von 8 µm, welche durch Veränderung der Verfahrensparameter einfach verändert werden kann. Nach Sprühtrocknung resultierte ein gelbliches, freifliessendes, in Wasser redispergierendes Pulver, wobei keine nennenswerte Verschmutzung im Sprühturm festzustellen war und die Ausbeute im normalen Bereich lag.

### Beispiel 3: Herstellung von Pulver 3

25.0g festes Kolophonium wurden bei Raumtemperatur in 25.0g eines flüssigen Alkyltriethoxysilans unter leichtem Rühren in einem 100ml Gefäss gelöst, Es resultierte eine stabile, niederviskose gelbliche Lösung. Die Lösung wurde bei Raumtemperatur unter Rühren langsam zu 375g einer 20%igen Polyvinylalkohollösung mit einem Verseifungsgrad von 88 Mol-% und einer Höppierviskosität als 4%-ige Lösung von 4 mPas in einem 800 ml Glasgefäss gegeben. Es resultierte eine leicht gelbliche Dispersion mit einem Feststoffanteil von 29 Gew.-% welche mit 0.1 N Natronlauge auf pH 7 eingestellt und anschliessend gemäss Bsp. 1 sprühgetrocknet wurde. Es resultierte ein gelbliches, freifliessendes, in Wasser redispergierendes Pulver, wobei keine nennenswerte Verschmutzung im Sprühturm festzustellen war und die Ausbeute im normalen Bereich lag.

### Beispiel 4: Herstellung von Pulver 4

28g der nach Bsp. 1 hergestellten Dispersion wurden zu 73g einer EVA-Dispersion mit einem Feststoffgehalt von 51 Gew.-% und einer Glasübergangstemperature T_{g} von -3°C gegeben und anschliessend gemäss Bsp. 1 sprühgetrocknet. Es resultierte ein gelbliches, freifliessendes, in Wasser redispergierendes Pulver, wobei keine nennenswerte Verschmutzung im Sprühturm festzustellen war und die Ausbeute im normalen Bereich lag.

### Vergleichsbeispiel 5: Herstellung von Pulver 5

Beispiel 1 wurde wiederholt, wobei jedoch 20g feste Stearinsäure (Fluka) anstelle von Kolophonium der Polyvinylgikohollösung zugegeben wurden. Es resultierte eine weisse Dispersion mit einem Feststoffanteil von 33 Gew-%, welche anschliessend analog Beispiel 1 zu einem weissen, freifliessenden, in Wasser redispergierenden Pulver getrocknet wurde.

### Vergleichsbeispiel 6: Herstellung von Pulver 6

Beispiel 1 wurde wiederholt, wobei jedoch 20g Camaubawachs (Merck; bestehend aus ca. 85% Wachsestern) anstelle von Kolophonium der Polyvinylalkohollösung zugegeben wurden. Es resultierte eine leicht gelbliche Dispersion mit einem Feststoffanteil von 33 Gew-%, welche anschliessend analog Bsp. 1 zu einem leicht gelblichen, freifliessenden, in Wasser redispergierenden Pulver getrocknet wurde.

### B) Anwendungstechnische Prüfungen mit verschiedenen zementären Massen.

### Anwendungsbeispiel 1:

Es wurden 35.0 Teile weisser Portlandzement, 19.2 Teile Quarzsand (0.08-0.2mm), 41.0 Teile Calciumcarbonat Durcal 65, 0.3 Teile eines Celluloseethers (Viskosität als 2% wässrige Lösung: 3200 mPas), 2.0 Teile Pigment Bayferrox 110 und 1.0 Teile Baukalk gut gemischt und als Trockenmörtel Grundrezeptur verwendet. Zu dieser wurden verschiedene Pulver in unterschiedlichen Mengen eingesetzt, wie aus Tabelle 1 hervorgeht, weiche ohne weitere spezielle Mischvorgänge einfach in die Mörtelmatrix eingerührt werden konnten Die Rezepturen wurden jeweils mit 32 Teilen Wasser, bezogen auf 100 Teile Trockenformulierung, mit einem 60mm Propellerrtihrer mit einer Geschwindigkeit von 950 Upm während 60 Sekunden angerührt, wobei die angegebene Menge Anmachwasser unter Rühren zugegeben wurde. Nach einer Reifezeit von 3 Minuten wurde der Mörtel von Hand nochmals kurz aufgerührt, und mit einem Kammspachtel auf eine unglasierte Steingutfliese mit einer Dicke von 6 mm auf einer Grösse von (196mm × 50mm) appliziert, wobei Fliesen unmittelbar vorher mit Wasser gesättigt wurden. Es wurden jeweils zwei verschiedene Proben hergestellt, wobei der Mörtel mittels Distanzschienen in einer Schichtdicke von 2.2 mm (respektive 1.0 mm) appliziert wurde.

Die Prüflinge wurden anschliessend sofort in einen auf 7°C gekühlten Klimaraum an einen Behälter mit Wasser montiert, welches konstant auf 20°C erwärmt wurde. Der Behälter wurde so konstruiert, dass Prüflinge mindestens 5 cm über der Wasseroberfläche zu liegen kommen und eine Neigung von einem 45° Winkel besitzen. Die von den Prüflingen nicht bedeckte Fläche wurde abgedeckt und isoliert, so dass Wasserdampf durch das Trägermaterial in und durch die Prüflinge dringt. Nach einer Lagerdauer von 7 Tagen wurde die Oberfläche auf Ausblühungen hin optisch (Auge und Mikroskop) beurteilt.

**Tabelle 1: Anwendungstechnische Beispiele anhand einer eingefärbten zementären Spachtelmasse mit einer Schichtdicke von 2.2 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver Nr. | Pulveranteil [Gew.-%] | Ausblühungen |
|---|---|---|---|---|
| B-1 (Ref) | 100 | N/A | 0 | Sehr stark |
| B-2 | 99.8 | 1 | 0.2 | keine |
| B-3 | 99.6 | 3 | 0.4 | keine |
| B-4 | 98.0 | 4 | 2.0 | keine |
| B-5(Vgl) | 99.8 | 5 | 0.2 | Sehr stark |
| B-6(Vgl) | 99.6 | 5 | 0.4 | Sehr stark |
| B-7(Vgl) | 99.8 | 6 | 0.2 | Sehr stark |
| B-8 (Vgl) | 99.6 | SEAL80^{a)} | 0.4 | stark |
| B-9 (Vgl) | 99.8 | SEAL80^{a)} | 0.2 | stark |

| | | | | |
|---|---|---|---|---|
| a) Elotex Sea180 ist ein redispergierbares Hydrophobierungsmittel auf Basis eines Spezialsilans und Polyvinylalkohol. | | | | |

Die Resultate zeigen deutlich, dass alle Kolophonium enthaltenden Proben die Ausblühungen so stark unterdrücken oder sogar ganz unterbinden, dass selbst unter dem Mikroskop keine beobachtet wurden. Die Referenzproben hingegen zeigen sehr starke Ausblühungen.

### Anwendungsbeispiel 2:

Proben, welche analog derjenigen von Anwendungsbeispiel 1 hergestellt wurden, wurden 7 Tage bei 23°C und 50% relativer Feuchtigkeit gelagert. Anschliessend wurde zur Beurteilung der Hydrophobie die Zeit bestimmt, bis 5 Tropfen Wasser (ca. 0.2g) auf der OberFläche verschwunden waren.

**Tabelle 2: Anwendungstechnische Beispiele anhand einer eingefärbten zementären Spachtelmasse mit einer Schichtdicke von 2.2 mm zur Beurteilung der Hydrophobie.**

| Versuch Nr. | Grundrezeptur Anteil [Gew.-%] | Pulver Nr. | Pulveranteil [Gew.-%] | Zeit [min] |
|---|---|---|---|---|
| H-1 (Ref) | 100 | N/A | 0 | sofort |
| H-2 | 99.6 | 2 | 0.4 | 240 |
| H-3 | 99.8 | 2 | 0.2 | 20 |
| H-4 (Vgl) | 99.6 | 5 | 0.4 | sofort |
| H-5(Vgl) | 99.8 | SEAL80^{a)} | 0.2 | 150 |
| H-6 (Vgl) | 99.6 | SEAL80^{a)} | 0.4 | 370 |

| | | | | |
|---|---|---|---|---|
| a) siehe Tabelle 1 | | | | |

Die Daten in der Tabelle 2 zeigen die sehr guten Hydrophobierungseigenschaften von Elotex Sea180, welches jedoch keine oder nur eine geringe Reduktion der Ausblühungen ergibt (siehe andere Beispiele). Die erfinderischen Pulver hingegen zeigen neben einer starken Reduktion der Ausblühungen überraschenderweise mit zunehmendem Anteil auch eine gute Mörtelhydrophobie. Das Pulver 5, enthaltend die als Hydrophoblerungsmittel bekannte Stearinsäure, weisst jedoch weder eine Hydrophobie noch eine Reduktion der Ausblühungen auf.

### Anwendungsbeispiel 3:

Das Anwendungsbeispiel 1 wurde wiederholt, wobei die Schichtdicke auf 1.0 mm eingestellt wurde.

**Tabelle 3: Anwendungstechnische Beispiele anhand einer eingefärbten zementären Spachtelmasse mit einer Schichtdicke von 1.0 mm zur Beurteilung von Ausblühungen.**

| Versuch Nr. | Grundrezeptur Anteil [Gew.-%] | Pulver Nr. | Pulveranteil [Gew.-%] | Ausblühungen |
|---|---|---|---|---|
| B-10 (Ref) | 100 | N/A | 0 | stark |
| B-11 | 99.8 | 1 | 0.2 | keine |
| B-12 | 99.6 | 3 | 0.4 | keine |
| B-13 | 98.0 | 4 | 2.0 | keine |
| B-14 (Vgl) | 99.6 | 5 | 0.4 | stark |
| B-15 (Vgl) | 99.8 | 5 | 0.2 | stark |
| B-16 (Vgl) | 99.8 | 6 | 0.2 | stark |
| B-17 (Vgl) | 99.8 | SEAL80^{a)} | 0.2 | stark |
| B-18 (Vgl) | 99.6 | SEAL80^{a)} | 0.4 | weniger |

| | | | | |
|---|---|---|---|---|
| b) siehe Tabelle 1 | | | | |

Die Resultate zeigen eine klare Reduktion der Ausblühungen auch in dünn aufgetragenen Mörteln, sofern ein erfinderisches Pulver eingesetzt wird. Pulver 4 in Versuch Nr. B-13 verdeutlicht auch, dass das erfinderische Pulver auch beispielsweise zu Dispersionspulvem gegeben und als solche Mischung eingesetzt werden kann.

### Anwendungsbeispiel 4:

Es wurden 28.0 Teile weisser Portlandzement, 25.0 Teile Quarzsand 0.1-0.3mm, 8.0 Teile Sand 0.7-1.2mm, 35.0 Teile Sand 1.5-2.2mm. 0.05 Teile eines Celluloseethers (Viskosität als 2% wässrige Lösung: 15'000 mPas) und 2.0 Teile Pigment Bayferrox 110 gut gemischt und als Trockenmörtelgrundrezeptur verwendet. Die Rezepturen wurden jeweils mit 18 Teilen Wasser, bezogen auf 100 Teile Trockenformulierung, angerührt und analog Anwendungsbeispiel 1 getestet.

**Tabelle 4: Anwendungstechnische Beispiele anhand eines dekorativen Farbputzes mit einer Schichtdicke von 2.2 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver Nr. | Pulveranteil [Gew.-%] | Ausblühungen |
|---|---|---|---|---|
| B-19 (Ref) | 100 | N/A | 0 | Sehr stark |
| B-20 | 99.8 | 1 | 0.2 | keine |
| B-21 | 99.8 | 3 | 0.2 | keine |
| B-22 | 98.0 | 4 | 2.0 | keine |
| B-23 (Vgl.) | 99.8 | 5 | 0.2 | Sehr stark |
| B-24 (Vgl.) | 99.6 | 5 | 0.4 | Sehr stark |
| B-25 (Vgl.) | 99.8 | 6 | 0.2 | Sehr stark |
| B-26 (Vgl.) | 99.6 | SEAL80^{a)} | 0.4 | stark |

| | | | | |
|---|---|---|---|---|
| c) siehe Tabelle 1 | | | | |

Die aufgeführten Resultate demonstrieren, dass die starke Reduktion der Ausblühungen auch in einem dekorativen Farbputz zustande kommt.

### Anwendungsbeispiel 5:

Es wurden 40.0 Teile weisser Portlandzement, 3 Teile Aluminatzement, 50.0 Teile Quarzsand 0.1-0.3mm, 2 Teile eines hydrophoben Dispersionspulvers (Elotex WS45), 1 Teil Cellulosefaser, 0.10 Teile Weinsäure und 2.0 Teile Pigment Bayferrox 110 und 1.0 Teile Baukalk gut gemischt und als Trockenmörtel Grundrezeptur verwendet. Die Rezepturen wurden jeweils mit 22 Teilen Wasser, bezogen auf 100 Teile Trockenformulierung, angerührt und analog Anwendungsbeispiel 1 getestet.

**Tabelle 5: Anwendungstechnische Beispiele anhand eines Fugenmörtels mit einer Schichtdicke von 2.0 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver Nr. | Pulveranteil [Gew.-°%] | Ausblühungen |
|---|---|---|---|---|
| B-27 (Ref) | 100 | N/A | 0 | stark |
| B-28 | 99.6 | 2 | 0.4 | keine |
| B-29 | 99.8 | 2 | 0.2 | keine |
| B-30 | 99.6 | 3 | 0.4 | keine |
| B-31 (Vgl) | 99.6 | SF-AL80^{a)} | 0.4 | stark |

| | | | | |
|---|---|---|---|---|
| d) siehe Tabelle 1 | | | | |

Die aufgeführten Resultate demonstrieren, dass die starke Reduktion der Ausblühungen auch in einem Fugenmörtel zustande kommt.

### Anwendungsbeispiel 6:

Es wurden 32.0 Teile weisser Portlandzement, 1 Teil Aluminatzement, 65.0 Teile Quarzsand (0-0.2mm), 0.35 Teile Calciumsulfat, 0.75 Teile eines hydrophoben Dispersionspulvers (Elotex HD1501), 0.25 Teile eines Verflüssigers auf Basis Melaminsulfonat, 0.1 Teil eines pulverförmigen Entschäumers, 0.5 Teile schwarzes Eisenoxid und 0.05 Teile eines Celluloseethers (Viskosität als 2% wässrige Lösung: 4000mPas) gut gemischt und als Trockenmörtel Grundrezeptur verwendet. Die Rezepturen wurden jeweils mit 17.5 Teilen Wasser, bezogen auf 100 Teile Trockenformulierung, angerührt und analog Anwendungsbeispiel 1 getestet.

**Tabelle 6: Anwendungstechnische Beispiele anhand eines Fugenmörtels mit einer Schichtdicke von 2.0 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur Anteil [Gew.-%] | Pulver Nr. | Pulveranteil [Gew.-%] | Ausblühungen |
|---|---|---|---|---|
| B-32 (Ref) | 100 | N/A | 0 | Sehr stark |
| B-33 | 99.8 | 2 | 0.2 | keine |
| B-34 | 99.6 | 3 | 0.4 | keine |
| B-35 (Vgl) | 996 | SEAL80^{a)} | 0.4 | stark |

| | | | | |
|---|---|---|---|---|
| e) siehe Tabelle 1 | | | | |

Die aufgeführten Resultate demonstrieren, dass die starke Reduktion oder sogar das totale Verhindern der Ausblüflungen nicht nur in verschiedenen Fugenmörteln auftritt, sondern in den verschiedensten Mörteln zustande kommt. Dazu wird erstaunlicherweise nur ein sehr geringer Anteil an diesem Additiv eingesetzt, was sich nicht oder nur sehr unwesentlich auf die anderen Mörteleigenschaften auswirkt - sei es im Frischmörtel oder im abgebundenen Zustand.

Obwohl das verwendete Kolophonium als Gefahrstoff klassifiziert ist, wird durch die Verkapselung des Kolophoniums mit Polyvinylalkohl das Gefahrenpotential erniedrigt.

Zudem bereitet die Handhabung in der Regel wesentlich weniger Probleme, da das Pulver frei fliessend ist und somit das Fördern, Dosieren und das Vermischen ohne grossen Arbeitsaufwand durchgeführt und oft auch automatisiert werden kann.

## Patentansprüche

1. In Wasser redispergierbares Pulver zur Reduktion von Ausblühungen in hydraulisch abgebundenen Systemen auf Basis mindestens einer organischen Komponente und mindestens eines wasserlöslichen organischen polymeren Schutzkolloids sowie gegebenenfalls weiteren Additiven, **dadurch gekennzeichnet, dass**
a) die organische Komponente mindestens eine Verbindung mit einer cyclischen Gruppe enthält, die ganz oder teilweise gesättigt ist, und einen Schmelzpunkt von etwa -20 bis 250 °C sowie ein Molekulargewicht von etwa 100 bis 10'000 besitzt, und
b) mit dem wasserlöslichen organischen polymeren Schutzkolloid in Wasser eine stabile Dispersion bildet, wobei
c) das Gewichtsvertiältnis der organischen Komponente zum wasserlöslichen organischen polymeren Schutzkolloid etwa von 95 : 5 bis 5 : 95 beträgt.

2. Pulver nach Anspruch 1, **dadurch gekennzeichnet, dass** die organische Komponente ein Terpenoid, eine Harzsäure, Kolophonium, Terpenharz, Terpen-Phenol-Harz und/ oder deren Derivat ist.

3. Pulver nach Anspruch 1 oder 2, **dadurch gekennzeichnet, dass** die cyclische Gruppe der organischen Komponente eine mono-, di-, tri-, tetra- und/ oder pentacyclische Gruppe ist.

4. Pulver nach mindestens einem der Ansprüche 1 bis 3, **dadurch gekennzeichnet, dass** die organische Komponente ein Naturprodukt ist, insbesondere ein Monoterpen, Sesquiterpen, Diterpen, Sesterterpen, Triterpen, Tetraterpen, Polyterpen und/ oder deren Derivate enthält.

5. Pulver nach mindestens einem der Ansprüche 1 bis 4, **dadurch gekennzeichnet, dass** die organische Komponente mindestens eine Verbindung mit mindestens einer Carboxyl-, Carbonyl-, Aldehyd- und/ oder Alkoholgruppe enthält.

6. Pulver nach mindestens einem der Ansprüche 1 bis 5, **dadurch gekennzeichnet, dass** die organische Komponente Abietinsäure, Sylvinsäure, Neoabietinsäure, Lävopinarsäure, Pimarsäure, Isopimarsäure, und/ oder Palustrinsäure und/ oder deren Derivate enthält.

7. Pulver nach mindestens einem der Ansprüche 1 bis 6, **dadurch gekennzeichnet, dass** die organische Komponente im sauren bis neutralen Wasser nicht oder nur schwer löslich ist.

8. Pulver nach mindestens einem der Ansprüche 1 bis 7, **dadurch gekennzeichnet, dass** die organische Komponente in verdünnter Natronlauge teilweise oder ganz löslich ist.

9. Pulver nach mindestens einem der Ansprüche 1 bis 8, **dadurch gekennzeichnet, dass** das wasserlösliche organische polymere Schutzkolloid ein synthetisches Schutzkolloid enthält, insbesondere in Form eines modifizierten und/ oder unmodifizierten Potyvinyfaikohois mit einem Hydrolysegrad von 70 bis 100 Mol-% und einer Höppierviskosität als 4%ige wässrige Lösung von 1 bis 50 mPas, gemessen bei 20°C nach DIN 53015, und/ oder Polyvinylpyrralldon.

10. Pulver nach mindestens einem der Ansprüche 1 bis 9, **dadurch gekennzeichnet, dass** das wasserlösliche organische polymere Schutzkolloid ein natürliches und/oder synthetisch hergestelltes Biopolymer darstellt, das gegebenenfalls synthetisch modifiziert ist, und insbesondere Stärke, Stärkeether, Dextrine, Celluloseether, Casein, und/ oder Soja-Protein ist.

11. Verfahren zur Herstellung von in Wasser redispergierbaren Pulvern nach mindestens einem der Ansprüche 1 bis 10, **dadurch gekennzeichnet, dass** die organische Komponente mit dem wasserlöslichen organischen polymeren Schutzkolloid in Wasser dispergiert und stabilisiert wird und die erhaltene wässrige Dispersion anschliessend getrocknet wird.

12. Verfahren nach Anspruch 11, **dadurch gekennzeichnet, dass** der Feststoffgehalt der mit dem wasserlöslichen organischen polymeren Schutzkolloid stabilisierten Dispersion der organischen Komponente etwa 10 bis 75 Gew.-%, insbesondere etwa 25 bis 65 Gew.-%, und die mittlere Partikelgrösse der dispergierten Teilchen etwa 0.05 bis 50 µm, insbesondere etwa 0.1 bis 20 µm beträgt.

13. Verfahren nach den Ansprüchen 11 und/ oder 12, **dadurch gekennzeichnet, dass** vor, während oder nach dem Dispergieren weitere flüssige und/ oder wasserlösliche Additive und während oder nach der Trocknung weitere pulverförmige Additive zugegeben werden.

14. Verfahren nach mindestens einem der Ansprüche 11 bis 13, **dadurch gekennzeichnet, dass** das redispergierbare Pulver nach der Trocknung mit in Wasser redispergierbaren filmbildenden Dispersionspulvern, pulverförmigen redispergierbaren Hydrophobierungsmittel, insbesondere auf Basis von Silanen, Siloxanen, Silikonen, Fettsäuren und/ oder Fettsäureestern, und/ oder pulverförmigen Potysacchandethern vermischt wird.

15. Verfahren nach mindestens einem der Ansprüche 11 bis 14, **dadurch gekennzeichnet, dass** die erhaltene wässrige Dispersion gemeinsam mit anderen Dispersionen, insbesondere auf Basis von film-bildenden Polymeren und/ oder Silanen, Silanestern, Siloxanen, Silikonen, Fettsäuren und/ oder Fettsäureestern getrocknet wird, wobei die jeweiligen Dispersionen vor der Trocknung miteinander vermischt werden oder getrennt versprüht und anschliessend gemeinsam getrocknet werden.

16. Verfahren nach mindestens einem der Ansprüche 11 bis 15, **dadurch gekennzeichnet, dass** der Trocknungsschritt weggelassen wird.

17. Verwendung des in Wasser redispergierbaren Pulvers nach mindestens einem der Ansprüche 1 bis 10 und/ oder der nach dem Verfahren gemäss Anspruch 16 hergestellten wässrigen Dispersion in hydraulisch abbindenden Massen.

18. Verwendung des Pulvers nach mindestens einem der Ansprüche 1 bis 10 in Trockenmörteiformutierungen enthaltend des weiteren mindestens ein hydraulisch abbindendes Bindemittel, sowie gegebenenfalls weitere Mörtelformulierungsadditive, insbesondere Füllstoffe, wie Sand, Silikate und/ oder Carbonate, organische Bindemittel, insbesondere Dispersionspulver und/ oder Polyvinylalkohol, Rheölogiesteuerungsadditive, insbesondere Polysaccharidether, Verflüssiger, Verdicker und/ oder Casein, Hydratationssteuerungsadditive, insbesondere Beschleuniger und/ oder Verzögerer.

19. Verwendung des Pulvers nach mindestens einem der Ansprüche 1 bis 10 und/oder der nach dem Verfahren gemäss Anspruch 16 hergestellten wässrigen Dispersion in Beton, Gips- und/ oder Kalk- und/ oder Zement- Putzen, Reparaturund/ oder Vollwärmeschutzmörtel, Fugen- und/ oder Fliesenklebern, Nivellierund/ oder Spachtelmassen, Dichtungsschlämmen, und/ oder als Additiv für Betonanstriche.

20. Verwendung des Pulvers nach mindestens einem der Ansprüche 1 bis 10 und/oder der nach dem Verfahren gemäss Anspruch 16 hergestellten wässrigen Dispersion in Klebstoffen.

21. Verwendung einer nach dem Verfahren gemäss Anspruch 16 hergestellten wässrigen Dispersion zur Reduktion von Ausblühungen in hydraulisch abgebundenen Systemen auf Basis mindestens einer organischen Komponente und mindestens eines wasserlöslichen organischen polymeren Schutzkolloids sowie gegebenenfalls weiteren Additiven, **dadurch gekennzeichnet, dass** die wässrige Dispersion
a) etwa 5 bis 95 Gewichtsteile, bezogen auf den Feststoffanteil, Kolophonium, Abietinsäure, Sylvinsäure, Neoabietinsäure, Lävopinarsäure, Pimarsäure, Isopimarsäure, und/ oder Palustrinsäure und/ oder deren Derivate,
b) etwa 5 bis 95 Gewichtsteile, bezogen auf den Feststoffanteil, wasserlösliches organisches polymeres Schutzkolloid, wobei dieses mindestens einen modifizierten und/ oder unmodifizierten Polyvinylalkohol mit einem Hydrolysegrad von etwa 70 bis 100 Mol-% und einer Höpplerviskosität als 4%ige wässrige Lösung von etwa 1 bis 50 mPas und/oder Polyvinylpyrrolidon darstellt, und
c) 0 bis etwa 50 Gewichtsteile, bezogen auf den Feststoffanteil, mindestens einer Silan und/ oder Siloxan Komponente enthält,
wobei der Feststoffanteil zwischen etwa 10 und 70 Gew.%, die mittlere Partikelgrösse zwischen etwa 0.05 bis 50 µm und die Brookfieldviskosität, gemessen nach DIN 53019 bei 23°C und 20 Upm, zwischen etwa 100 bis 50'000 mPas beträgt.
